# EUROPÄISCHE PATENTSCHRIFT

(11) **EP 1 679 217 B1**
(45) Veröffentlichungstag und Bekanntmachung des Hinweises auf die Patenterteilung: **30.05.2007**
(21) Anmeldenummer: 05025007.5
(22) Anmeldetag: 16.11.2005
(51) Int. Cl.: B60J 10/00, B60J 1/18, B60J 10/02

(54) **Heckscheibenanordnung für Fahrzeuge**
Rear window structure for vehicles
Configuration d'une fenêtre arrière pour véhicules

(30) Priorität: 07.01.2005 DE 102005000943
(43) Veröffentlichungstag der Anmeldung: 12.07.2006
(73) Patentinhaber: CTS Fahrzeug-Dachsysteme GmbH, 74321 Bietigheim-Bissingen (DE)
(72) Erfinder: Anders, Jens, 31094 Marienhagen (DE); Parthen, Sabine, 74427 Fichtenberg (DE)
(74) Vertreter: Wittner, Walter

(56) Entgegenhaltungen:
- DE-A1- 4 039 444
- DE-A1- 10 260 792
- DE-U1- 20 107 371
- PATENT ABSTRACTS OF JAPAN Bd. 017, Nr. 038 (M-1358), 25. Januar 1993 (1993-01-25) & JP 04 257734 A (KINUGAWA RUBBER IND CO LTD; others: 02), 11. September 1992 (1992-09-11)

## Beschreibung

Die Erfindung betrifft eine Heckscheibenanordnung für Fahrzeuge gemäß dem Oberbegriff des Anspruches 1.

Die Anordnung und Einbindung der Heckscheibe in die Dachstruktur von Fahrzeugen mit offenem Aufbau ist sowohl bei Fahrzeugen mit flexiblem Verdeck (Softtops) wie auch bei Fahrzeugen mit formsteifem Verdeck (Hardtops) aus vielerlei Gründen problematisch. Dies nicht nur in Bezug auf das jeweils geschlossene Dach, sondern auch bei abgelegtem Dach.

Bei geschlossenem Dach resultieren bei Softtops aus der Einbindung einer starren Heckscheibe in den flexiblen Verdeckbezug Schwierigkeiten, auch sind ästhetisch befriedigende Übergänge zwischen Heckscheibe und flexiblem Verdeckbezug mit erheblichem Aufwand verbunden, insbesondere bei stufenfreien Übergängen. Weitere Probleme ergeben sich bei der Ablage, insbesondere wenn großflächige Heckscheiben Verwendung finden sollen.

In Verbindung mit Softtops veranschaulicht dies die im Oberbegriff des Anspruches 1 berücksichtigte DE 40 39 444 A1, die eine über einen Rahmen getragene und über den Rahmen an das ausgespannte Verdeck von innen angelegte Heckscheibe zeigt. Das Verdeck bildet somit zum Rahmen ein umgrenzendes Bauteil, zu dem der Rahmen über Dichtungen_angelegt ist und zusammen mit den Dichtungen einen rinnenförmigen Kanal begrenzt, von dem ein Wasserablauf ausgeht. Das in dem rinnenförmigen Kanal gesammelte und über den Wasserablauf abgeführte Sickerwasser wird auf einen weiteren Kanal abgeführt, der durch eine Schlauchdichtung gebildet ist, welche dem Spannbügel des Verdeckes zugeordnet ist und über die bei geschlossenem Verdeck der das Verdeck heckseitig ausspannende Spannbügel an eine heckseitige Abdeckung des Fahrzeuges anschließt.

Bei Hardtops, wie sie beispielsweise aus der DE 101 37 023 A1 bekannt sind, sind grundsätzliche Schwierigkeiten in Abhängigkeit von der jeweiligen Paketbildung für die Dachteile bei abgelegtem Dach schon dadurch bedingt, dass das Heckteil des Daches, dem die Heckscheibe zugeordnet ist, einen häufig sowohl in Längs- wie auch in Querrichtung stärker gewölbten Dachteil bildet, der in der Ablagestellung besonders raumintensiv ist. Um die damit verbundenen Einschränkungen zu reduzieren, ist die Heckscheibe mit dem zugehörigen Rahmen gegenüber dem Rest des Heckteiles bei der Ablage verstellbar. Dies bedingt für die Heckscheibe beim Schließen des Daches eine dichtende Einpassung zwischen die anschließenden Bauteile, wobei als solche Bauteile die seitlich anschließenden C-Säulen, der an das Heckteil anschließende Dachteil sowie auch der Heckdeckel in Frage kommen. Der dichtende Anschluss soll zudem in einer Weise verwirklicht werden, durch die die Dachkontur in ihrem Erscheinungsbild nicht durch unerwünschte Fugen beeinträchtigt wird und bei der sich die Heckscheibe möglichst übergangslos in die Dachfläche einfügt, weswegen die Heckscheibe mit ihrer randseitig vorgesehenen Dichtung von unten an die angrenzenden Bauteile angelegt wird.

Zur Halterung von Kraftfahrzeugscheiben gegenüber der Karosserie des Fahrzeuges, insbesondere von Windschutzscheiben, ist es bekannt (DE 29 44 753 C2), die Scheiben gegenüber der Karosserie elastisch abzustützen, um im Falle eines Aufpralls einer Person eine gewisse Nachgiebigkeit zu erreichen und so die Gefahr schwerer Verletzungen zu reduzieren. Die Windschutzscheibe wird hierbei gegenüber dem Scheibenrahmen über ein stoßabsorbierendes Polsterelement abgestützt, das im Bereich der so genannten A-Säulen zugleich Verkleidungselement für den Übergang zwischen Windschutzscheibe und Türrahmen ist und das, auch zur Reduzierung der Verschmutzung der Seitenfenster, im zu diesen vorgelagerten Bereich mit einer Regenrinne versehen ist. Das in dieser Regenrinne gefangene Wasser wird einem frontseitig zur A-Säule verlaufenden Ablaufkanal zugeführt.

Weiter ist aus der DE 30 22 416 A1 zur Abführung von Schmutz und Regenwasser längs des Fahrzeuges eine Ausgestaltung desselben vorgesehen, bei der beiderseits der Fahrzeuglängsmittelebene vom Bug- bis zum Heckbereich des Fahrzeuges durchgehende Wasserführungskanäle vorgesehen sind, die zur Fahrzeughaut aufgesetzt, oder in diese eingelassen oder eingearbeitet sind oder die durch entsprechend der angestrebten Wasserführung verlaufende Dichtungsprofile begrenzt sind, Letzteres beispielsweise durch zwischen Kotflügel und Motorhaube in Längsrichtung verlaufende, den Spalt zwischen Kotflügel und Motorhaube überbrückende und im Querschnitt U-förmige Dichtungsprofile.

Der Erfindung liegt bezogen auf eine Heckscheibenanordnung der eingangs genannten Art die Aufgabe zugrunde, den dichtenden Anschluss zwischen Heckscheibe und angrenzenden Bauteilen in einer Weise zu verwirklichen, durch die die Dachkontur in ihrem Erscheinungsbild nicht beeinträchtigt wird und bei der die Heckscheibe möglichst übergangslos in die Dachfläche eingefügt ist, wobei durch die Ausgestaltung des dichtenden Anschlusses gleichzeitig auch sichergestellt wird, dass im Fugenbereich eindringendes Wasser ohne Beeinträchtigung des Erscheinungsbildes abgeführt werden kann.

Eine dieser Problemstellung Rechnung tragende Heckscheibenanordnung ergibt sich aus den Merkmalen des Anspruches 1, demzufolge die Heckscheibe eine zum Rahmen übergreifende Abdeckung bildet, sodass die Heckscheibe zumindest längs einer ihrer Kanten bis nahe an das jeweils angrenzende Bauteil herangeführt werden kann und der konstruktiv notwendige, verbleibende Spalt von innen über ein dem Rahmen der Heckscheibe zugeordnetes Dichtungsprofil überbrückt und geschlossen werden kann. Damit kann die Heckscheibe sich nahezu fugenlos flächig zum jeweils angrenzenden Bauteil erstrecken, so beispielsweise zur C-Säule oder dem angrenzend an das Heckteil vorgesehenen Dachteil, wobei sowohl der Rahmen wie auch die Verbindung zwischen Rahmen und Heckscheibe, so insbesondere die Verklebung zwischen Rahmen und Heckscheibe von der Heckscheibe überdeckt sind und durch entsprechende Färbung der Rasterung der Heckscheibe dem Blick des Beschauers entzogen sind.

Das Auskragen der Heckscheibe über den Rahmen in Richtung auf das jeweils anzuschließende Bauteil führt im auskragenden Bereich der Heckscheibe zu einem Freiraum zwischen Rahmen und Heckscheibe, in den ungeachtet einer durch eine dem Rahmen der Heckscheibe zugeordnete Dichtung als Überbrückung zum bei geschlossenem Dach angrenzenden Bauteil Wasser und Schmutz eindringen kann. Entsprechend kann auch trotz vorgesehener Dichtung zum angrenzenden Bauteil über diese Dichtgrenze Wasser eindringen.

Um etwaige, daraus resultierende nachteilige Folgen auszuschließen, ist bei der erfindungsgemäßen Lösung eine Ausbildung des Rahmens mit zwei längs des Umfangs des Rahmens verlaufenden Kanälen vorgesehen, von denen der eine, innere Kanal durch den vom auskragenden Teil der Scheibe überdeckten Raum gebildet ist und der andere, äußere Kanal durch den äußeren Randbereich des Rahmens der Heckscheibe gebildet oder diesem zugeordnet ist. Damit bildet der äußere Randbereich einen untergreifend zum abzudichtenden Spalt zwischen Heckscheibe und angrenzendem Bauteil liegenden Kanal, sodass über den Spalt eindringendes Wasser abgefangen werden kann. Trotz guter Abdichtung des Spaltes lässt sich das Eindringen von Wasser nicht ausschließen, zum Beispiel aufgrund belastungsbedingter Lageveränderungen zwischen Karosserie und Dach, wie auch aufgrund von am Dach angreifenden Windkräften oder aufgrund von Verwindungen der Karosserie bei unebener Aufstandsfläche für das Fahrzeug.

Für die vorstehend angesprochenen, aufgrund der Dichtungsgegebenheiten voneinander getrennten Kanäle wird durch die erfindungsgemäße Lösung eine gemeinsame Wasserabführung ermöglicht, und zwar dadurch, dass ein Abschnitt des äußeren Kanals untergreifend zum inneren Kanal in eine Überdeckungslage zu diesem gebracht wird, sodass über eine den inneren Kanal durchsetzende Durchtrittsöffnung das dort angesammelte Wasser auf den äußeren Kanal übertreten kann, der seinerseits mit einer entsprechenden Abflussöffnung versehen ist. Diese kann zweckmäßigerweise ebenfalls im Bereich des verbreiterten und abgesenkten Bodenabschnittes des äußeren Kanales vorgesehen werden.

Der äußere Kanal kann im Rahmen der Erfindung durch entsprechende Formgebung des auskragenden Randbereiches des Rahmens gebildet sein, besonders zweckmäßig ist es aber im Rahmen der Erfindung, dem auskragenden Randbereich ein entsprechendes, den Kanal ausformendes Dichtprofil zuzuordnen, sodass der äußere auskragende Randbereich des Rahmens über das zugeordnete und von ihm getragene Dichtungsprofil den äußeren Kanal bildet. Dieses Dichtungsprofil ist zweckmäßigerweise als im Querschnitt U-förmiges Profil ausgebildet, dessen Boden dem auskragenden Randbereich des Rahmens zugeordnet ist und dessen Schenkel in Dichtwülsten auslaufen, sodass sich gegenüber dem angrenzenden Bauteil eine zweifache Dichtgrenze bildet und über den spaltüberdeckenden, zwischen angrenzendem Bauteil und Heckscheibe liegenden Dichtwulst eindringendes Wasser im äußeren Kanal gefangen wird.

Das Dichtprofil kann zweckmäßigerweise als auf den auslaufenden Randbereich aufgestecktes Profil ausgebildet werden, das bezüglich des vom Rand abgelegenen inneren Schenkels zum äußeren Schenkel des inneren Kanales anliegend verläuft, sodass der äußere Schenkel des inneren Kanales eine weitere Aussteifung für das Dichtungsprofil bildet.

In entsprechender Weise wie über das Dichtungsprofil mit seinen vom Boden aufragenden Schenkeln kann auch über den äußeren Schenkel, also der Randschenkel des inneren Kanales und den auslaufenden Randbereich des Rahmens bei entsprechend nach oben abgewinkeltem Verlauf der Kanal gebildet werden. Ferner können der Randschenkel des inneren Kanales und der auslaufende Randbereich des Rahmens auch Träger entsprechender Dichtwulste sein, falls eine eigenständige Verbindung der Dichtwulste mit dem Rahmen gewünscht wird.

Die übergreifende Ausbildung des äußeren Kanales durch Verbreiterung desselben in seiner Bodenzone zum inneren Kanal lässt sich insbesondere in Eckbereichen des Rahmens in einfacher Weise und ohne kritische Schwächung des Rahmenprofiles gestalten, wobei die entsprechende Ausbildung im Eckbereich des Rahmens auch zweckmäßig ist im Hinblick auf die Lage der Ablauföffnung, die dem äußeren Kanal zugeordnet ist, da so Ablaufschläuche im Seitenbereich der Karosserie angeordnet werden können und den Nutzraum des Fahrzeuges nicht beeinträchtigen.

Weitere Einzelheiten und Merkmale der Erfindung ergeben sich aus den Ansprüchen. Ferner wird die Erfindung nachstehend anhand eines Ausführungsbeispieles erläutert. Es zeigen:
- Fig. 1: den Heckscheibenrahmen einer dem Heckteil eines mehrteiligen öffnungsfähigen Daches zugeordneten Heckscheibe, die mit ihrem Rahmen zwischen den C-Säulen des Heckteiles liegt, wobei der Rahmen Träger von Dichtungen zu den angrenzenden Bauteilen, so den C-Säulen, dem davor liegenden Dachteil und/oder einem Heckdeckel ist und die Dichtungen spaltüberdeckend zu den angrenzenden Bauteilen über den Heckscheibenrahmen von unten gegen diese Bauteile anzulegen sind,
- Fig. 2: eine Draufsicht auf einen Bereich des Heckscheibenrahmens gemäß Fig. 1,
- Fig. 3: eine vergrößerte Darstellung des Ausschnittes III in Fig. 2,
- Fig. 4: einen Schnitt durch den Rahmen gemäß Fig. 2 entsprechend der Schnittführung IV-IV in Fig. 2, wobei die gezeigte Schnittdarstellung stark vereinfacht ist,
- Fig. 5: eine der Schnittführung gemäß Fig. 4 entsprechende Darstellung, ergänzt um eine schematisierte Darstellung des angrenzenden Bauteiles (C-Säule) sowie die Darstellung der Heckscheibe und des Dichtungsprofiles,
- Fig. 6: eine Schnittdarstellung durch den Rahmen gemäß Fig. 2 entsprechend einer Schnittführung VI-VI in Fig. 2, und
- Fig. 7: eine schematisierte vereinfachte Darstellung, ausgehend von der Darstellung gemäß Fig. 6, teilweise ergänzt entsprechend der Darstellung gemäß Fig. 5.

Die Erfindung wird erläutert in Bezug auf ein Dach, das in bekannter Weise als dreiteiliges Hardtop ausgebildet ist. Das Dach grenzt in seiner Schließlage mit dem vorderen Dachteil an den Windlauf und mit dem Heckteil an den Heckdeckel des Fahrzeugs an und ist in der Öffnungslage geschichtet, derart, dass das vordere Dachteil unter Beibehalt der Ausrichtung das Mittelteil überdeckt und dass das Heckteil in Rückenlage unter dem Mittelteil liegt.

Das vordere und das mittlere Dachteil weisen einen konventionellen Grundaufbau mit einem Dachaußenblech und einem dieses untergreifenden und aussteifenden Dachinnenblech auf. Umfangsseitig sind Dachaußenblech und Dachinnenblech verbördelt und verklebt, in weiteren Stützbereichen des Dachinnenbleches gegenüber dem Dachaußenblech erfolgt eine Verklebung über Stützkleber.

Trag- und Anschlussteile zum jeweiligen Dachteil sind mit dem Innenblech verbunden, das bereichsweise zusätzliche Versteifungen aufweist.

Einen entsprechenden konventionellen Aufbau weist der Heckdeckel auf.

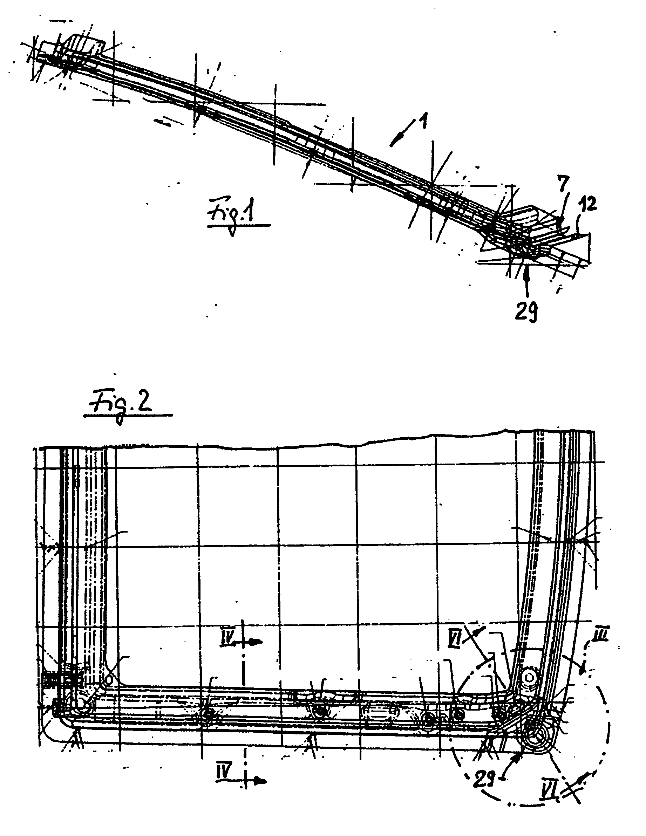

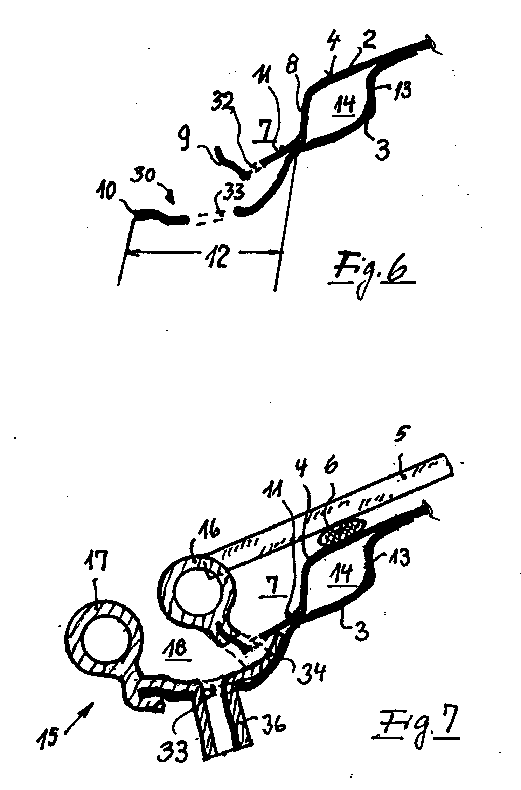

Das Heckteil ist dreiteilig ausgebildet und besteht aus seitlich außen liegenden Bauteilen 21 in Form von C-Säulen und dem dazwischen liegenden Heckscheibenrahmen 1, der in den Fig. 1 bis 7 dargestellt ist, wobei Fig. 5 und 7 zum Verständnis ergänzend das zum Heckscheibenrahmen 1 umlaufend vorgesehene Dichtungsprofil 15 zeigen.

Der Heckscheibenrahmen 1 ist als Hohlprofil ausgebildet und besteht, wie Fig. 4 bis 7 zeigen, aus einem Außenblech 2 und einem Innenblech 3. Das Außenblech 2 bildet umlaufend die Auflageebene 4, auf der die Heckscheibe 5 durch Verklebung, wie bei 6 angedeutet ist, befestigt ist.

Im von der Heckscheibe 5 weitgehend überdeckten und zum umfangsseitigen Rand der Heckscheibe 5 und des Heckscheibenrahmens 1 offenen, außerhalb der Verklebung 6 liegenden Bereich des Heckscheibenrahmens 1 weist dieser als inneren Kanal 7 eine aus dem Außenblech 2 geformte Rinne auf. Der rinnenförmige innere Kanal 7 ist durch einen von der Auflageebene 4 des Außenbleches 2 gegen das Innenblech 3 gebogenen Innenschenkel 8 und einen in Gegenrichtung auslaufenden Randschenkel 9 begrenzt. Im Bereich des zwischen dem Innenschenkel 8 und dem Randschenkel 9 liegenden Rinnenbodens 11 sind Außenblech 2 und Innenblech 3 verbunden. Das Innenblech 3 erstreckt sich im Wesentlichen etwa parallel zur Auflageebene 4 und ist gegenüberliegend zu seinem gegen den umfangsseitigen, freien Rand 10 auskragenden und frei auslaufenden Bereich 12, beabstandet zum Innenschenkel 8 des inneren, durch das Außenblech 2 gebildeten Kanales 7, über einen gegen das Außenblech 2 gebogenen Schenkel 13 mit dem Außenblech 2 verbunden. Hierdurch begrenzen das Innenblech 3 und das Außenblech 4 den Hohlraum 14 des Heckscheibenrahmens 1.

Der auskragende Bereich 12 des Innenbleches 3 und der winklig gegenüber diesem aufragende Randschenkel 9 bilden den Befestigungsbereich für das Dichtungsprofil 15, das U-förmige Grundform aufweist und dessen Schenkel in schlauchförmigen Dichtwülsten 16, 17 auslaufen. Die auf die Dichtwülste 16, 17 auslaufenden Schenkel des Dichtungsprofiles 15 begrenzen einen äußeren, d. h. dem Rand 10 benachbarten äußeren Kanal 18.

Die schlauchförmigen Dichtwülste 16, 17 sind Bestandteile zueinander beabstandeter Dichtzonen 19, 20 zwischen dem Heckscheibenrahmen 1 und einem angrenzenden Bauteil 21 - in Fig. 5 entsprechend der Schnittführung IV - IV als C-Säule angedeutet. Über die der Umgebung zugewandte Dichtzone 19 eindringendes Wasser wird im Kanal 18 als Wasserkanal gesammelt und muss aus diesem abgeleitet werden.

Die Heckscheibe 5 überdeckt den Heckscheibenrahmen 1, bildet für diesen eine Sichtblende, und steht randseitig frei über den Heckscheibenrahmen 1 über. Dadurch ergibt sich zwischen der Heckscheibe 5, der Verklebung 6 und dem durch den rinnenförmigen, inneren Kanal 7 gebildeten Teil des Heckscheibenrahmens 1 ein gegen die Umgebung offener Raum, der über den zur Heckscheibe 5 benachbart liegenden Dichtwulst 16 abgedichtet wird. Der Dichtwulst 16 bildet eine Dichtbrücke zwischen dem angrenzenden Bauteil 21 und der Heckscheibe 5. Zur Abstützung und Abdichtung auch des inneren Kanales 7 kann der Dichtwulst 16 mit einem die Rinne als inneren Kanal 7 überdeckenden und sich gegen den Innenschenkel 8 erstreckenden Ansatz 28 versehen sein.

Ungeachtet der dichtenden Überdeckung auch des durch die Rinne gebildeten inneren Kanales 7 kann sich in diesem Wasser ansammeln, das abgeführt werden muss.

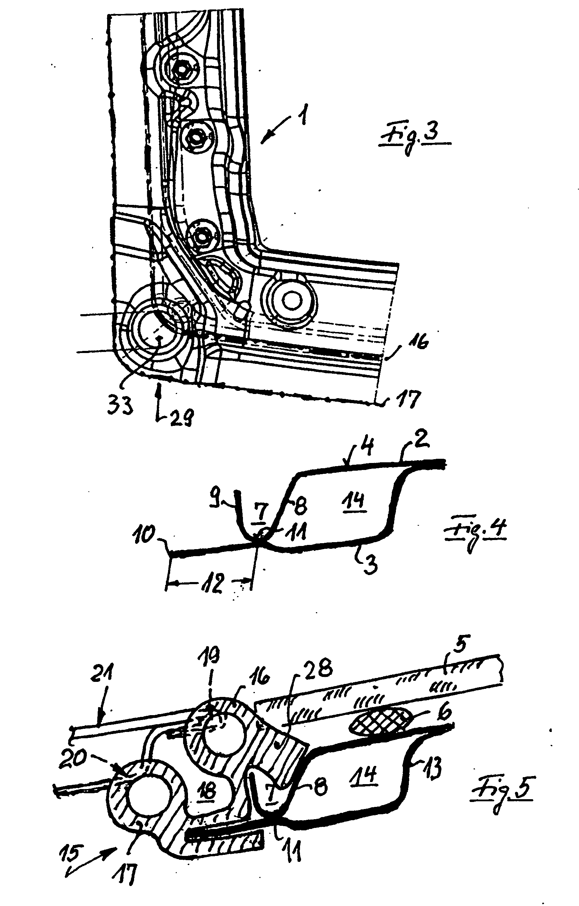

Um das in der Rinne als inneren Kanal 7 wie auch das im äußeren Kanal 18 sich ansammelnde Wasser abzuführen, ist der Heckscheibenrahmen 1 in seinem hinteren unteren Randbereich - bezogen auf die schräg nach oben angestellte Lage der Heckscheibe 5 bei geschlossenem Dach - mit einem Wasserablauf 29 versehen. Bevorzugt ist jedem der unteren Eckbereiche des Heckscheibenrahmens 1 ein solcher Wasserablauf 29 zugeordnet, wie dies für einen Eckbereich in Fig. 3 dargestellt ist.

Ein Wasserablauf 29 umfasst seitens des Heckscheibenrahmens 1 im Randbereich 12 des Innenbleches 3 jeweils eine zum Niveau des Rinnenbodens 11 vertieft liegende Zone, als Schale 30 dargestellt, sowie einen im Überdeckungsbereich zur Schale 30 liegenden Teil des Rinnenbodens 11, und es ist in diesem überdeckend zur Schale 30 liegenden Teil des Rinnenbodens 11 des inneren Kanales 7 eine Durchtrittsöffnung 32 von dem inneren Kanal 7 auf die Schale 30 vorgesehen, die ihrerseits mit einer Ablauföffnung 33 im Schalengrund versehen ist.

Die Überdeckung zwischen der als Schale 30 ausgebildeten Vertiefungszone des auskragenden Bereiches 12 des Innenbleches 3 und der Rinne als inneren Kanal 7 kommt dadurch zustande, dass die Rinne durch Versatz des Innenschenkels 8 nach der vom Rand 10 abgelegenen Seite verbreitert wird, was zu einer entsprechenden Verringerung der Breite des Hohlraumes 14 führt, und dass die durch die Schale 30 gebildete Vertiefungszone sich nach der vom Rand 10 abgewandten Seite bis in die Nähe des Innenschenkels 8 erstreckt, in dessen Bereich Innenblech 3 und Außenblech 2 verbunden sind. Hierdurch kommt zumindest ein Teilbereich des Rinnenbodens 11 in eine freie Überdeckungslage zur Schale 30 und es ist möglich, den Rinnenboden 11 im ausgehend von der Verbindung zwischen der im Bereich des Innenschenkels 8 liegenden Verbindung zwischen Außenblech 2 und Innenblech 3 frei überstehenden Bereich mit der Durchtrittsöffnung 32 zu versehen.

Fig. 7 veranschaulicht, dass diese Ausgestaltung bezüglich der Wasserabführung aus der Rinne als innerem Kanal 7 auf den äußeren Kanal 18 zweckmäßig ist, da der dem Randschenkel 9 zugeordnete Dichtungsschenkel im Übergang auf die Bodenzone der Dichtung mit einem der Durchtrittsöffnung 32 entsprechenden Ausschnitt versehen werden kann und gegebenenfalls der durch den Ausschnitt freigeschnittene Lappen 34 der Dichtungswandung, wie in Fig. 7 gezeigt, die Durchtrittsöffnung 32 untergreifend sich in den Zwickel zwischen dem Rinnenboden 11 und dem die Schale 30 bildenden Teil des Innenbleches 3 erstrecken kann. Das Dichtungsprofil 15 weist des Weiteren in seiner zwischen den Schenkeln liegenden Bodenzone eine der Ablauföffnung 33 entsprechende Öffnung auf, und ausgehend hiervon einen Ablaufstutzen 36, der die Ablauföffnung 33 durchsetzt und an den in nicht gezeigter Weise ein Ablaufschlauch oder dergleichen anschließen kann.

Die in Fig. 3 gezeigte Ausschnittsvergrößerung verdeutlicht, dass die Anordnung des Wasserablaufes 29 im Eckbereich des Heckscheibenrahmens 1 eine besonders vorteilhafte Lösung darstellt, da die Eckzone günstige Möglichkeiten bietet, die Überdeckung zwischen dem inneren Kanal 7 in Form der Rinne und dem äußeren Kanal 18 herzustellen, und zwar bei durchgängig regelmäßigem Verlauf der Dichtwülste 16, 17 längs des Umfangs des Heckscheibenrahmens 1 bei gleichmäßig verrundetem Übergang in den Eckzonen und bei Aufrechterhaltung einer auch aus Festigkeitsgründen erforderlichen Mindestbreite des Hohlraumes 14. Auch lässt sich so ein großer Durchmesser der Schale 30 erreichen. In der Draufsicht gemäß Fig. 3 ist der Verlauf der Dichtungswülste 16 und 17 des Dichtungsprofiles 15 strichpunktiert angedeutet und auch die Ablauföffnung 33 veranschaulicht.

Das Außenblech 2 und das Innenblech 3 bilden das äußere und das innere Profil des Scheibenrahmens 1. Anstelle eines solchen Blechprofiles kann auch ein entsprechendes Gussprofil Verwendung finden. Ferner besteht auch die Möglichkeit, den Scheibenrahmen 1 als Gussteil im Vollprofil herzustellen.

Der äußere Kanal 18 ist im geschilderten und dargestellten Ausführungsbeispiel durch das einstückige, Dichtwulste 16, 17 und den Kanal 18 bildende Dichtungsprofil 15 gebildet und der Kanal 18 als äußerer Kanal des Heckscheibenrahmens 1 ist damit quasi durch eine "Ergänzung" zum Rahmen 1 gebildet. Dies stellt eine besonders zweckmäßige Lösung dar, sowohl unter Dichtungs- wie auch unter Herstellungsgesichtspunkten sowie auch unter dem Gesichtspunkt der Fixierung und Lagesicherung des Dichtungsprofils 15 auch über den Ansatz 28.

Schon die Betrachtung insbesondere der Darstellung gemäß Fig. 5 lässt aber erkennen, dass der im Rand 10 auslaufende Bereich auch durch Aufstellen des freien Endes zu einem Kanal geformt sein kann, dessen begrenzende Schenkel - innenseitig durch den Randschenkel 9 gebildet - Träger für separate Dichtwulste sein können. Die Kanalform des Bereiches wäre aber auch geeignet, ein dem Dichtungsprofil 15 ähnliches Profil aufzunehmen.

Über den mit dem Wasserablauf 29 versehenen Eckbereich schließen, entsprechend der Darstellung in Fig. 2 und 3, die winklig zueinander stehenden Rahmenseiten des Rahmens 1 an die benachbarten Bauteile an, wobei der Übergang zu einer C-Säule 21 - als benachbartes Bauteil - in Fig. 5 beispielhaft auch für den Übergang zu einem an die untere Rahmenseite des Rahmens 1 anschließenden Heckdeckel als benachbartes Bauteil ist.

## Patentansprüche

1. Heckscheibenanordnung für Fahrzeuge mit mehrteiligem, zu öffnendem Dach
o mit im Dach angeordneter, gegenüber zumindest einem angrenzenden Bauteil (21) verstellbarer, geneigter Heckscheibe (5),
o mit im Übergang zum angrenzenden Bauteil (21) vorgesehener Dichtung,
o mit einem die Heckscheibe (5) tragenden und von der Heckscheibe (5) übergriffenen Rahmen (1),
o mit einem längs einer quer zur Neigung der Heckscheibe (5) liegenden, unteren Rahmenseite verlaufenden, rahmenseitigen und in Richtung auf die Scheibenebene offenen, rinnenförmigen Kanal (7), und
o mit einer Verbindung des rinnenförmigen Kanals (7) zu einem gleich gerichtet verlaufenden, zum angrenzenden Bauteil (21) benachbarten, an einen Wasserablauf (29) angeschlossenen Kanal,
**dadurch gekennzeichnet**,
o dass beide Kanäle (7, 18) dem Rahmen (1) zugeordnet sind,
o dass der rinnenförmige Kanal als zum Rahmen innerer Kanal (7) vom Randbereich der Heckscheibe (5) überdeckt ist,
o dass der mit dem Wasserablauf (29) versehene Kanal einen rahmenseitig äußeren, gegen die Scheibenebene offenen Kanal (18) bildet,
o dass der rahmenseitig äußere Kanal (18) untergreifend zum über die Dichtung (16) zu überdeckendenden Spalt zwischen Heckscheibe (5) und angrenzenden Bauteil (21) liegt, und
o dass der innere Kanal (7) zum äußeren Kanal (18) einen bergriffsbereich mit in diesem vorgesehener Durchtrittsöffnung (32) aufweist.

2. Heckscheibenanordnung nach Anspruch 1,
**dadurch gekennzeichnet,**
**dass** der äußere Kanal (18) einen Abschnitt aufweist, der bodenseitig abgesenkt und im Bodenbereich in Richtung auf den benachbarten inneren Kanal (7) verbreitert ist.

3. Heckscheibenanordnung nach Anspruch 1 oder 2,
**dadurch gekennzeichnet,**
**dass** die Durchtrittsöffnung (32) auf den äußeren Kanal (18) einem Eckbereich des Rahmens (1) zugeordnet ist.

4. Heckscheibenanordnung nach Anspruch 1 bis 3,
**dadurch gekennzeichnet,**
**dass** der bodenseitig abgesenkte, verbreiterte Bereich des äußeren Kanales (18) einem Eckbereich des Rahmens (1) zugeordnet ist.

5. Heckscheibenanordnung nach einem der Ansprüche 1 bis 4,
**dadurch gekennzeichnet,**
**dass** der äußere Kanal (18) als zwischen Dichtungen liegender, durch den Rahmen (1) gebildeten Kanal ausgebildet ist.

6. Heckscheibenanordnung nach einem der Ansprüche 1 bis 5,
**dadurch gekennzeichnet,**
**dass** der äußere Kanal (18) als zwischen Dichtwulsten (16, 17) liegender, durch den Rahmen (1) gebildeten Kanal ausgebildet ist.

7. Heckscheibenanordnung nach Anspruch 1 bis 4,
**dadurch gekennzeichnet,**
**dass** der äußere Kanal (18) des Rahmens (1) durch ein von einem auskragenden Randbereich (12) des Rahmens (1) getragenes Dichtungsprofil (15) gebildet ist.

8. Heckscheibenanordnung nach Anspruch 7,
**dadurch gekennzeichnet,**
**dass** der äußere Kanal (18) U-förmigen Querschnitt aufweist, mit an den Schenkeln auslaufend vorgesehenen Dichtwulsten (16, 17).

9. Heckscheibenanordnung nach Anspruch 7 oder 8,
**dadurch gekennzeichnet,**
**dass** der im Querschnitt U-förmige, durch ein Dichtungsprofil (15) gebildete äußere Kanal (18) mit seiner zwischen den Schenkeln liegenden Bodenzone dem auskragenden Randbereich (12) des Rahmens (1) überdeckend zugeordnet ist.

10. Heckscheibenanordnung nach Anspruch 9,
**dadurch gekennzeichnet,**
**dass** das im Querschnitt U-förmige Dichtungsprofil (15) im Bereich der Bodenzone auf den auskragenden Randbereich (12) des Rahmens (1) aufgesteckt ist.

11. Heckscheibenanordnung nach einem der vorhergehenden Ansprüche,
**dadurch gekennzeichnet,**
**dass** der innere Kanal (7) des umfangsseitig in einem auskragenden Randbereich (12) auslaufenden Rahmens (1) durch eine quer zum auskragenden Randbereich (12) sich öffnende Rinne gebildet ist.

12. Heckscheibenanordnung nach einem der vorhergehenden Ansprüche,
**dadurch gekennzeichnet,**
**dass** die den inneren Kanal (7) bildende Rinne (7), bodenseitig in Überlappung zum verbreiterten Abschnitt des äußeren Kanales (18) liegend, über diesen auskragt.

13. Heckscheibenanordnung nach einem der vorhergehenden Ansprüche,
**dadurch gekennzeichnet,**
**dass** der Rahmen (1) als Hohlprofil mit einem Innenblech (3) und einem Außenblech (2) ausgebildet ist, wobei, umfangsseitig auslaufend, das Außenblech (2) den inneren Kanal (7) und das Innenblech (3) den auskragenden Rand (10) des Rahmens (1) bildet.

14. Heckscheibenanordnung nach Anspruch 13,
**dadurch gekennzeichnet,**
**dass** der auskragende Rand des Rahmens (2) als rinnenförmiger Kanal den äußeren Kanal (18) bildet.

15. Heckscheibenanordnung nach Anspruch 12 bis 14,
**dadurch gekennzeichnet,**
**dass** das Außenblech (2) im Bereich der den inneren Kanal (7) bildenden Rinne gegen das Innenblech (3) eingebogen ist.

16. Heckscheibenanordnung nach einem der Ansprüche 13 bis 15,
**dadurch gekennzeichnet,**
**dass** das Innenblech (3) und das Außenblech (2) im Bodenbereich der den inneren Kanal (7) bildenden Rinne verbunden sind.

17. Heckscheibenanordnung nach einem der Ansprüche 13 bis 16,
**dadurch gekennzeichnet,**
**dass** das Innenblech (3) beabstandet zur den inneren Kanal (7) bildenden Rinne anschließend an einen von dem Innenblech (3) und dem Außenblech (2) begrenzten Hohlraum (14) gegen das Außenblech (2) eingebogen ist.

18. Heckscheibenanordnung nach einem der Ansprüche 13 bis 17,
**dadurch gekennzeichnet,**
**dass** die im Bereich des Bodens (11) des inneren Kanales (7) liegende Verbindung zwischen Innenblech (3) und Außenblech (2) in dem bodenseitig verbreiterten und abgesenkten Abschnitt des äußeren Kanales (18) benachbart zum Innenschenkel des inneren Kanales (7) verläuft, der in Richtung auf den Hohlraum (14) zwischen Innenblech (3) und Außenblech (2) verbreitert ist.

19. Heckscheibenanordnung nach einem der vorhergehenden Ansprüche,
**dadurch gekennzeichnet,**
**dass** der Auflagebereich zwischen dem Rahmen (1) und der Heckscheibe (5) in Überdeckung zum Hohlraum (14) zwischen dem Innenblech (3) und dem Außenblech (2) liegt.

20. Heckscheibenanordnung nach Anspruch 19,
**dadurch gekennzeichnet,**
**dass** die Heckscheibe (5) im Auflagenbereich gegen den Rahmen (1) verklebt ist.

21. Heckscheibenanordnung nach einem der vorhergehenden Ansprüche,
**dadurch gekennzeichnet,**
**dass** der innere Schenkel des Dichtungsprofiles (15) einen den inneren Kanal (7) übergreifenden Ansatz (28) aufweist, der sich gegen Innenschenkel (8) des inneren Kanales (7) abstützt.

22. Heckscheibenanordnung nach Anspruch 21,
**dadurch gekennzeichnet,**
**dass** der Ansatz (28) in den inneren Kanal (7) eingreift.

## Claims

1. Rear window arrangement for vehicles with multi-part roof that can be opened
o with a rear window (5) arranged in the roof, adjustable, inclined relative to at least one adjoining component (21),
o with a seal provided in the transition to the adjacent component (21),
o with a frame (1) carrying the rear window (5) and overlain by the rear window (5),
o with a groove-shaped channel (7) which runs along a lower frame side, which is open on the frame side and in the direction of the window plane which is located transversely relative to the inclination of the rear window (5), and
o with a connection of the groove-shaped channel (7) to a channel connected to a water drain (29) which runs in alignment and which is adjacent to the adjoining component (21),
**characterized in that**
o both channels (7, 18) are assigned to the frame (1),
o the groove-shaped channel as inner channel (7) relative to the frame is covered by the marginal area of the rear window (5),
o the channel provided with the water drain (29) forms an outer channel (18) on the frame side which is open towards the window plane,
o the outer channel (18) on the frame side is located underlying the gap between rear window (5) and adjoining component (21) to be covered via the seal (16), and
o the inner channel (7) to the outer channel (18) has an overlying area with passage opening (32) provided in said area.

2. Rear window arrangement according to Claim 1, **characterized in that** the outer channel (18) has a section which is sunk on the floor side and widened in the floor area in the direction of the adjacent inner channel (7).

3. Rear window arrangement according to Claim 1 or 2, **characterized in that** the passage opening (32) to the outer channel (18) is assigned to a corner area of the frame (1).

4. Rear window arrangement according to Claim 1 to 3, **characterized in that** the widened area sunk on the floor side of the outer channel (18) is assigned to a corner area of the frame (1).

5. Rear window arrangement according to any one of the Claims 1 to 4, **characterized in that** the outer channel (18) is designed as a channel formed by the frame (1) located between seals.

6. Rear window arrangement according to any one of the Claims 1 to 5, **characterized in that**, the outer channel (18) is designed as a channel formed by the frame (1) located between sealing beads (16, 17).

7. Rear window arrangement according to Claim 1 to 4, **characterized in that** the outer channel (18) of the frame (1) is formed through a sealing profile (15) supported by a projecting marginal area (12) of the frame (1).

8. Rear window arrangement according to Claim 7, **characterized in that** the outer channel (18) has a U-shaped cross section with sealing beads (16, 17) provided on the legs in a terminating way.

9. Rear window arrangement according to Claim 7 or 8, **characterized in that** the outer channel (18) U-shaped in cross section formed through a sealing profile (15) with its floor zone located between the legs is assigned to the projecting marginal area (12) of the frame (1) in a covering way.

10. Rear window arrangement according to Claim 9, **characterized in that** the sealing profile (15) U-shaped in cross section is fitted in the area of the floor zone onto the projecting marginal area (12) of the frame (1).

11. Rear window arrangement according to any one of the preceding claims, **characterized in that** the inner channel (7) of the frame (1) terminating on the circumferential side in a projecting marginal area (12) is formed through a groove which opens transversely to the projecting marginal area (12).

12. Rear window arrangement according to any one of the preceding claims, **characterized in that** the groove (7) forming the inner channel (7) on the floor side positioned overlapping with the widened section of the outer channel (18) projects beyond said channel.

13. Rear window arrangement according to any one of the preceding claims, **characterized in that** the frame (1) is designed as a hollow profile with an inner plate (3) and an outer plate (2), wherein, terminating on the circumferential side, the outer plate (2) forms the inner channel (7) and the inner plate (3) forms the projecting margin (10) of the frame (1).

14. Rear window arrangement according to Claim 13, **characterized in that** the projecting margin of the frame (2) forms the outer channel (18) as groove-shaped channel.

15. Rear window arrangement according to Claim 12 to 14, **characterized in that** the outer plate (2) in the area of the groove forming the inner channel (7) is bent in towards the inner plate (3).

16. Rear window arrangement according to any one of the Claims 13 to 15, **characterized in that** the inner plate (3) and the outer plate (2) are joined in the floor area of the groove forming the inner channel (7).

17. Rear window arrangement according to any one of the Claims 13 to 16, **characterized in that** the inner plate (3), interspaced from the groove forming the inner channel (7), adjoining a cavity (14) bordered by the inner plate (3) and the outer plate (2) is bent in towards the outer plate (2).

18. Rear window arrangement according to any one of the Claims 13 to 17, **characterized in that** the connection located in the area of the floor (11) of the inner channel (7) between inner plate (3) and outer plate (2), in the section of the outer channel (18) widened on the floor side and sunk, runs adjacent to the inner leg of the inner channel (7) which is widened in the direction of the cavity (14) between inner plate (3) and outer plate (2).

19. Rear window arrangement according to any one of the preceding claims, **characterized in that** the support area between the frame (1) and the rear window (5) in covering the cavity (14) is located between the inner plate (3) and the outer plate (2).

20. Rear window arrangement according to Claim 19, **characterized in that** the rear window (5) in the support area against the frame (1) is bonded.

21. Rear window arrangement according to any one of the preceding claims, **characterized in that** the inner leg of the sealing profile (15) has a shoulder (28) projecting over the inner channel (7) which is supported against the inner leg (8) of the inner channel (7).

22. Rear window arrangement according to Claim 21, **characterized in that** the shoulder (28) engages in the inner channel (7).

## Revendications

1. Agencement de vitre arrière pour véhicules comprenant un toit ouvrant en plusieurs parties,
- avec une vitre arrière inclinée (5) disposée dans le toit, réglable par rapport à au moins un composant adjacent (21),
- avec un joint d'étanchéité prévu dans la transition au composant adjacent (21),
- avec un cadre (1) portant la vitre arrière (5) et engagé par le dessus par la vitre arrière (5),
- avec un canal (7) en forme de rigole, s'étendant le long d'un côté du cadre inférieur situé transversalement à l'inclinaison de la vitre arrière (5), du côté du cadre et ouvert dans la direction du plan de la vitre, et
- avec une connexion du canal (7) en forme de rigole à un canal s'étendant dans la même direction, raccordé à une évacuation d'eau (39) et situé à proximité du composant adjacent (21),
**caractérisé en ce que**
- les deux canaux (7, 18) sont associés au cadre (1),
- **en ce que** le canal en forme de rigole, en tant que canal interne (7) par rapport au cadre, est recouvert par la région de bord de la vitre arrière (5),
- **en ce que** le canal pourvu de l'évacuation d'eau (29) forme un canal externe (18) du côté du cadre, ouvert vers le plan de la vitre,
- **en ce que** le canal externe (18) du côté du cadre se situe de manière à venir en prise par le dessous vers la fente à recouvrir par le biais du joint d'étanchéité (16) entre la vitre arrière (5) et le composant adjacent (21), et
- **en ce que** le canal interne (7) présente vers le canal externe (18) une région d'engagement par le haut avec l'ouverture de passage (32) prévue dans celui-ci.

2. Agencement de vitre arrière selon la revendication 1, **caractérisé en ce que**
le canal externe (18) présente une portion qui est renfoncée du côté du fond et qui est élargie dans la région du fond dans la direction du canal interne (7) adjacent.

3. Agencement de vitre arrière selon la revendication 1 ou 2, **caractérisé en ce que**
l'ouverture de passage (32) sur le canal externe (18) est associée à une région de coin du cadre (1) .

4. Agencement de vitre arrière selon les revendications 1 à 3,
**caractérisé en ce que**
la région élargie du canal externe (18), renfoncée du côté du fond, est associée à une région de coin du cadre (1).

5. Agencement de vitre arrière selon l'une quelconque des revendications 1 à 4,
**caractérisé en ce que**
le canal externe (18) est réalisé sous la forme d'un canal situé entre des joints d'étanchéité, formé par le cadre (1).

6. Agencement de vitre arrière selon l'une quelconque des revendications 1 à 5,
**caractérisé en ce que**
le canal externe (18) est réalisé sous la forme d'un canal situé entre des bourrelets d'étanchéité (16, 17), formé par le cadre (1).

7. Agencement de vitre arrière selon les revendications 1 à 4,
**caractérisé en ce que**
le canal externe (18) du cadre (1) est formé par un profilé d'étanchéité (15) porté par une région de bord en saillie (12) du cadre (1).

8. Agencement de vitre arrière selon la revendication 7,
**caractérisé en ce que**
le canal externe (18) présente une section transversale en forme de U, avec des bourrelets d'étanchéité (16, 17) prévus au bout des branches.

9. Agencement de vitre arrière selon la revendication 7 ou 8,
**caractérisé en ce que**
le canal externe (18) en forme de U en section transversale, formé par un profilé d'étanchéité (15), est associé par recouvrement avec sa zone de fond située entre les branches à la région de bord en saillie (12) du cadre (1).

10. Agencement de vitre arrière selon la revendication 9,
**caractérisé en ce que**
le profilé d'étanchéité (15) en forme de U en section transversale est enfoncé dans la région de la zone de fond sur la région de bord en saillie (12) du cadre (1).

11. Agencement de vitre arrière selon l'une quelconque des revendications précédentes,
**caractérisé en ce que**
le canal interne (7) du cadre (1) se terminant au niveau de son pourtour par une région de bord en saillie (12) est formé par une rigole s'ouvrant transversalement par rapport à la région de bord en saillie (12).

12. Agencement de vitre arrière selon l'une quelconque des revendications précédentes,
**caractérisé en ce que**
la rigole (7) formant le canal interne (7), située du côté du fond de manière à chevaucher la portion élargie du canal externe (18), dépasse au-delà de celle-ci.

13. Agencement de vitre arrière selon l'une quelconque des revendications précédentes,
**caractérisé en ce que**
le cadre (1) est réalisé sous la forme d'un profilé creux avec une tôle intérieure (3) et une tôle extérieure (2), la tôle extérieure (2), en se terminant du côté périphérique, formant le canal interne (7) et la tôle intérieure (3) formant le bord en saillie (10) du cadre (1).

14. Agencement de vitre arrière selon la revendication 13,
**caractérisé en ce que**
le bord en saillie du cadre (1) forme en tant que canal en forme de rigole le canal externe (18).

15. Agencement de vitre arrière selon les revendications 12 à 14,
**caractérisé en ce que**
la tôle extérieure (2) est cintrée vers l'intérieur vers la tôle intérieure (3) dans la région de la rigole formant le canal interne (7).

16. Agencement de vitre arrière selon l'une quelconque des revendications 13 à 15,
**caractérisé en ce que**
la tôle intérieure (3) et la tôle extérieure (2) sont connectées dans la région du fond de la rigole formant le canal interne (7).

17. Agencement de vitre arrière selon l'une quelconque des revendications 13 à 16,
**caractérisé en ce que**
la tôle intérieure (3) est cintrée vers l'intérieur vers la tôle extérieure (2) à distance de la rigole formant le canal interne (7) en se raccordant à un espace creux (14) limité par la tôle intérieure (3) et la tôle extérieure (2).

18. Agencement de vitre arrière selon l'une quelconque des revendications 13 à 17,
**caractérisé en ce que**
la connexion située dans la région du fond (11) du canal interne (7) entre la tôle intérieure (3) et la tôle extérieure (2) s'étend dans la portion renfoncée et élargie du côté du fond du canal externe (18) à proximité de la branche intérieure du canal interne (7), qui est élargi dans la direction de l'espace creux (14) entre la tôle intérieure (3) et la tôle extérieure (2).

19. Agencement de vitre arrière selon l'une quelconque des revendications précédentes,
**caractérisé en ce que**
la région d'appui entre le cadre (1) et la vitre arrière (5) est située dans le recouvrement de l'espace creux (14) entre la tôle intérieure (3) et la tôle extérieure (2).

20. Agencement de vitre arrière selon la revendication 19,
**caractérisé en ce que**
la vitre arrière (5) est collée contre le cadre (1) dans la région d'appui.

21. Agencement de vitre arrière selon l'une quelconque des revendications précédentes,
**caractérisé en ce que**
la branche intérieure du profilé d'étanchéité (15) présente un bout (28) venant en prise par le dessus avec le canal interne (7), lequel s'appuie contre la branche intérieure (8) du canal interne (7).

22. Agencement de vitre arrière selon la revendication 21,
**caractérisé en ce que**
le bout (28) vient en prise dans le canal interne (7).
